# EUROPEAN PATENT APPLICATION

(11) **EP 2 009 778 A1**
(43) Date of publication of application: **31.12.2008**
(21) Application number: 07714635.5
(22) Date of filing: 21.02.2007
(51) Int. Cl.: H02M 3/28, H02J 3/38, H02J 7/34, H02M 7/48

(54) **SYSTEM INTERCONNECTION POWER CONDITIONER AND SYSTEM INTERCONNECTION POWER SUPPLY SYSTEM**

(30) Priority: 18.04.2006 JP 2006114497
(71) Applicant: Sharp Kabushiki Kaisha, Osaka-shi, Osaka 545-8522 (JP)
(72) Inventor: NISHIMURA, Kazuhito, Nara 639-2122 (JP)
(74) Representative: Müller - Hoffmann & Partner
(86) International application number: PCT/JP2007/053135
(87) International publication number: WO 2007/122849

(57) **Abstract**

During charging operations of a power storage unit (6), a voltage converting unit (7) converts a voltage (Vo) received from direct-current buses (3A, 3B) and supplies it to power storage unit (6), whereas during discharging operations of power storage unit (6), voltage converting unit (7) converts a voltage (Vi) received from power storage unit (6) and outputs it to direct-current buses (3A, 3B). In voltage converting unit (7), a side connected to power storage unit (6) and a side connected to direct-current buses (3A, 3B) are insulated from each other. As a result of this, if a ground failure occurs in power storage unit (6), its effects on an inverter circuit (4), a commercial power system (3) and the like are prevented. A grid-connected power conditioner (2) with high safety can thus be obtained.

## Description

### TECHNICAL FIELD

The present invention relates to a grid-connected power conditioner that outputs direct-current electric power supplied from a direct-current power supply source to a commercial power system in a system-interconnection fashion, and a grid-connected power supply system including this grid-connected power conditioner.

### BACKGROUND ART

A distributed power supply system interconnected with a commercial power system converts alternating-current or direct-current electric power generated from generators, solar cells, fuel cells and the like into alternating-current electric power of a commercial frequency by a grid-connected power conditioner and supplies the converted alternating-current electric power to household loads connected to the commercial power system. The distributed power supply system exports surplus electric power back into the system side if electric power generated from generators, solar cells, fuel cells and the like exceeds electric power consumed by the household loads. In recent years, the spread of distributed power supply systems, notably photovoltaic (PV) systems for residential use, is rapidly expanding from the viewpoints of stable supply of energy to electric power consumers and global environmental conservation. Examples of such distributed power supply systems are disclosed, e.g., in Japanese Patent Laying-Open No. 2005-312287 (patent document 1).

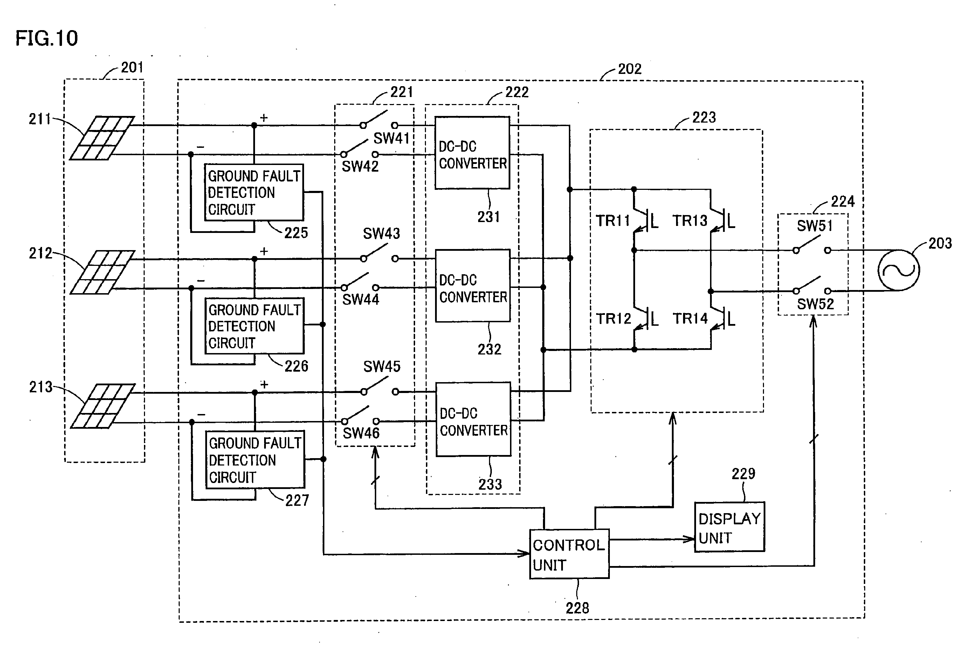

Fig. 10 shows a distributed power supply system described in Japanese Patent Laying-Open No. 2005-312287 (patent document 1).

Referring to Fig. 10, the distributed power supply system includes a direct-current power supply unit 201 and a grid-connected inverter device 202. Grid-connected inverter device 202 converts direct-current electric power generated by direct-current power supply unit 201 to alternating-current electric power and provides the alternating-current electric power to a commercial power system 203. In a normal state where no ground fault occurs, switching circuits SW41 to SW46, SW51 and SW52 are in the ON state.

Direct-current power supply unit 201 includes solar cell modules 211 to 213. Grid-connected inverter device 202 includes switching units 221 and 224, a DC-DC converter unit 222, an inverter circuit 223, ground fault detection circuits 225 to 227, a control unit 228 and a display unit 229. Switching unit 221 includes switching circuits SW41 to SW46. DC-DC converter unit 222 includes DC-DC converters 231 to 233. Inverter circuit 223 includes transistors TR11 to TR14. Switching section 224 includes switching circuits SW51 and SW52.

Each of solar cell modules 211 to 213 converts solar energy to electric energy and supplies direct-current electric power to grid-connected inverter device 202. Each of solar cell modules 211 to 213 is a module in which a plurality of solar cells are connected in series. DC-DC converters 231 to 233 receive the direct-current electric power generated by solar cell modules 211 to 213, respectively, via switching section 221. These DC-DC converters 231 to 233 convert direct-current voltages obtained, respectively, from solar cell modules 211 to 213 to a predetermined voltage. Output parts of DC-DC converters 231 to 233 are combined to one to be connected to inverter circuit 223.

Inverter circuit 223 converts the direct-current electric power from DC-DC converters 231 to 233 to alternating-current electric power. In inverter circuit 223, transistors TR11 to TR14 are PWM (pulse width modulation) controlled, so that output electric power is adjusted. The alternating-current electric power from inverter circuit 223 is supplied via switching unit 224 to commercial power system 203.

If a ground fault occurs in a charged portion by direct-current power supply unit 201, ignition, smoking and an electrification may occur due to a large current flowing via the ground fault portion. To prevent this, ground fault detection circuits 225 to 227, control unit 228 and display unit 229 are provided. Ground fault detection circuit 225 has one input terminal connected to a plus terminal of solar cell module 211 and the other input terminal connected to a minus terminal of solar cell module 211 to detect a ground fault in a charged portion caused by solar cell module 211. Ground fault detection circuit 226 has one input terminal connected to a plus terminal of solar cell module 212 and the other input terminal connected to a minus terminal of solar cell module 212 to detect a ground fault in a charged portion caused by solar cell module 212. Ground fault detection circuit 227 has one input terminal connected to a plus terminal of solar cell module 213 and the other input terminal connected to a minus terminal of solar cell module 213 to detect a ground fault in a charged portion caused by solar cell module 213.

Control unit 228 rapidly switches switching circuits SW41 to SW46, SW51 and SW52 from the ON state to the OFF state and stops actions of inverter circuit 223 if a ground fault is detected by ground fault detection circuits 225 to 227. Accordingly, expansion of the range of service interruption and public disasters upon occurrence of a ground fault can be prevented. Control unit 228 further causes display unit229 to display a warning about occurrence of the ground fault. This allows users to recognize occurrence of the ground-fault accident.

As the spread of PV systems as shown in Fig. 10 expands, cases where distributed power supply systems exist locally at high density in the electric distribution system are expected to increase. As one of such cases, an example may be mentioned where PV systems are installed in a plurality of homes in a residential street.

One problem anticipated with the increase of the foregoing cases is a decrease in quality of electric power. The reason for the decrease in quality of electric power is an increase in system voltage due to an increase in electric power of reverse power flow, or large variations in power generation of a PV system due to variations in the amount of solar irradiation. Therefore, in order to further promote the spread of distributed power supply systems including PV systems, stabilizing of supply of electric power and relaxing of effects on a commercial system are important problems.

For example, the specification of Japanese Patent No. 2710736 (patent document 2) discloses a power generating apparatus that can solve the foregoing problems. This power generating apparatus includes solar cells, a first inverter that converts direct-current output of the solar cells to alternating-current output and connects the output to an electric power system having loads, a second inverter that converts the alternating-current output from the first inverter, and a power storage unit that stores output from the second inverter. This power generating apparatus further has a control means. This control means controls the first inverter such that the alternating-current output from the first inverter is input to the second inverter, the input is converted by the second inverter, and the power storage unit is charged with output by the conversion, thereby performing maximum power point tracking control on the output from the first inverter. This control means also causes electric power with which the power storage unit has been charged to be discharged if an output value from the first inverter is equal to or less than a predetermined value, and causes the discharged electric power to be converted by the second inverter and output to the electric power system.

In a system of interconnecting output of solar cells with an electric power system via an inverter, if voltage (output voltage of the inverter) at a receiving end of a commercial power system rises, the foregoing power generating apparatus stores part of generated electric power of the solar cells in the power storage means. This reduces electric power to be exported back into the system, enabling the voltage rise to be prevented.

Japanese Patent Laying-Open No. 2002-354677 (patent document 3) discloses a power conditioner for PV power generation. This power conditioner for PV power generation includes a first DC-DC converter that operates to convert voltage at an input voltage with which output electric power from solar cells becomes maximum, and an inverter that converts direct-current electric power from the first DC-DC converter to alternating-current electric power and supplies it to a load side. The power conditioner for PV power generation further includes a second DC-DC converter that converts direct-current electric power from a rechargeable battery to be charged by a battery charger to a predetermined direct-current voltage and outputs it to the input side of the inverter (the output side of the first DC-DC converter). The power conditioner for PV power generation can independently control the output voltage of the rechargeable battery and the output voltage of the solar cells even during its isolated operations, and therefore can always extract the maximum electric power from the solar cells.
Patent document 1: Japanese Patent Laying-Open No. 2005-312287
Patent document 2: the specification of Japanese Patent No. 2710736
Patent document 3: Japanese Patent Laying-Open No. 2002-354677

### DISCLOSURE OF THE INVENTION

### PROBLEMS TO BE SOLVED BY THE INVENTION

In the power generating apparatus disclosed in the specification of Japanese Patent No. 2710736 (patent document 2), on the occasion of storing electric power from solar cells into a power storage means, first, direct-current electric power output from solar cells are converted to alternating-current electric power by a first inverter. Then, the power generating apparatus converts the alternating-current electric power to direct-current electric power by a second inverter, and charges the power storage means by using the converted direct-current electric power. Therefore, this power generating apparatus has a problem that the electric power loss in a conversion circuit becomes large.

On the other hand, in a power conditioner for PV power generation disclosed in Japanese Patent Laying-Open No. 2002-354677 (patent document 3), a first DC-DC converter and a second DC-DC converter are provided on a charging path from solar cells to a power storage means. Therefore, without DC-AC conversion, a direct-current voltage from solar cells can be converted to a direct-current voltage to be input to the power storage means. That is, with the configuration of this power conditioner for PV power generation, the electric power loss can be reduced.

In this power conditioner for PV power generation, however, a boost chopper is used as a first DC-DC converter connected to solar cells, and a bidirectional chopper is used as a second DC-DC converter connected to a power storage unit. Therefore, the solar cells are not insulated from the commercial power system, and the power storage means is not insulated from the commercial power system.

However, in general, the rated short-circuit current of a power storage means such as a rechargeable battery is very large as compared with that of a direct-current power supply such as solar cells. If a ground fault occurs in a power storage means or a direct-current power supply, ignition, smoking and an electrification may occur due to the flow of a large current.

On the other hand, from the viewpoint of reduction of the electric power loss, it is preferable that the difference between the output voltage of solar cells and the input voltage of a power storage means be small. This, however, means that the output voltage of the power storage means becomes large. That is, the closer the output voltage of the power storage means is to the output voltage of the solar cells, the larger may be the current flowing upon a ground fault of the power storage unit.

As described above, a method has not been proposed that reduces the electric power loss in a grid-connected power supply system having a power storage device and that can enhance the safety when a direct-current ground fault occurs in the power storage device.

The present invention has been achieved in order to solve the foregoing problems. It is an object of the invention to provide a grid-connected power conditioner and a grid-connected power supply system that reduce the electric power loss during charging and discharging of a power storage unit and that improve the safety against a direct-current ground fault.

### MEANS FOR SOLVING THE PROBLEMS

To summarize, the present invention is a grid-connected power conditioner connected with a direct-current power supply source for generating electric power, a power storage unit and a commercial power system, the grid-connected power conditioner including a first voltage converting unit, an inverter circuit and a second voltage converting unit. The first voltage converting unit converts a voltage of direct-current power supplied from the direct-current power supply source to a first direct-current voltage and outputs the first direct-current voltage to direct-current positive and negative buses. The inverter circuit receives the first direct-current voltage from the direct-current positive and negative buses, and converts the first direct-current voltage to an alternating-current voltage and outputs the alternating-current voltage to the commercial power system. The second voltage converting unit is connected between the power storage unit and the direct-current positive and negative buses. The second voltage converting unit converts the first direct-current voltage received from the direct-current positive and negative buses to a second direct-current voltage and supplies the second direct-current voltage to the power storage unit during a charging operation of the power storage unit, and converts the second direct-current voltage received from the power storage unit to the first direct-current voltage and outputs the first direct-current voltage to the direct-current positive and negative buses during a discharging operation of the power storage unit. The second voltage converting unit has a side connected to the power storage unit and a side connected to the direct-current positive and negative buses, the sides insulated from each other.

Preferably, the second voltage converting unit is an isolated DC-DC converter. The second voltage converting unit includes a high-frequency transformer performing a transforming action with an input terminal and an output terminal insulated from each other.

More preferably, the power storage unit has a positive terminal and a negative terminal. The high-frequency transformer has a primary winding having a first center tap connected to the positive terminal, and a secondary winding having a larger number of turns than the primary winding and having a second center tap. The second voltage converting unit further includes a first switching element, a second switching element, an inductor, a third switching element and a fourth switching element. The first switching element is connected between one end of two ends other than the first center tap in the primary winding and the negative terminal. The second switching element is connected between the other end of the two ends other than the first center tap in the primary winding and the negative terminal. The inductor has one end connected to the second center tap and the other end connected to a direct-current positive bus of the direct-current positive and negative buses. The third switching element is connected between one end of two ends other than the second center tap in the secondary winding and a direct-current negative bus of the direct-current positive and negative buses. The fourth switching element is connected between the other end of the two ends other than the second center tap in the secondary winding and the direct-current negative bus.

Further preferably, the grid-connected power conditioner further includes a control unit. During the discharging operation of the power storage unit, the control unit causes the third and fourth switching elements to be always in the OFF state and controls the ON-OFF state of the first and second switching elements. Also, during the charging operation of the power storage unit, the control unit causes the first and second switching elements to be always in the OFF state and controls the ON-OFF state of the third and fourth switching elements.

Further preferably, the control unit performs PWM control to the first to fourth switching elements. During the discharging operation of the power storage unit, the control unit controls the time during which each of the first and second switching elements is in the ON state so that an output voltage from the second voltage converting unit to the direct-current positive and negative buses is kept to the first direct-current voltage and a value of electric power discharged from the power storage unit becomes a first desired value. During the charging operation of the power storage unit, the control unit controls the time during which each of the third and fourth switching elements is in the ON state so that a value of electric power supplied from the second voltage converting unit to the power storage unit becomes a second desired value.

More preferably, the power storage unit has a positive terminal and a negative terminal. The high-frequency transformer has a primary winding having one end connected to the negative terminal, and a secondary winding having a larger number of turns than the primary winding and having one end connected to a direct-current negative bus of the direct-current positive and negative buses. The second voltage converting unit further includes a first capacitor, a first switching element, a first inductor, a second capacitor, a second switching element and a second inductor. The first capacitor has one end connected to the other end of the primary winding. The first switching element is connected between the other end of the first capacitor and the other end of the primary winding. The first inductor is connected between the other end of the first capacitor and the positive terminal. The second capacitor has one end connected to the other end of the secondary winding. The second switching element is connected between the direct-current negative bus and the other end of the second capacitor. The second inductor is connected between the other end of the second capacitor and a direct-current positive bus of the direct-current positive and negative buses.

Further preferably, the grid-connected power conditioner further includes a control unit. During the discharging operation of the power storage unit, the control unit causes the second switching element to be always in the OFF state and controls the ON-OFF state of the first switching element. Also, during the charging operation of the power storage unit, the control unit causes the first switching element to be always in the OFF state and controls the ON-OFF state of the second switching element.

Further preferably, the control unit performs PWM control to the first and second switching elements. During the discharging operation of the power storage unit, the control unit controls the time during which the first switching element is in the ON state so that an output voltage from the second voltage converting unit to the direct-current positive and negative buses is kept to the first direct-current voltage and a value of electric power discharged from the power storage unit becomes a first desired value. During the charging operation of the power storage unit, the control unit controls the time during which the second switching element is in the ON state so that a value of electric power supplied from the second voltage converting unit to the power storage unit becomes a second desired value.

Further preferably, the first voltage converting unit is connected between the direct-current power supply source and the direct-current positive and negative buses, the direct-current power supply source insulated from the direct-current positive and negative buses.

Further preferably, the first voltage converting unit is an isolated DC-DC converter. The first voltage converting unit includes a high-frequency transformer performing a transforming action with an input terminal and an output terminal insulated from each other.

Further preferably, during a period when the direct-current power supply source generates electric power, the inverter circuit converts the first direct-current voltage received from the direct-current positive and negative buses to the alternating-current voltage and outputs the alternating-current voltage to the commercial power system. During a predetermined period of a period when the direct-current power supply source does not generate electric power, the inverter circuit converts the alternating-current voltage received from the commercial power system to the first direct-current voltage and outputs the first direct-current voltage to the direct-current positive and negative buses.

According to another aspect of the invention, a grid-connected power supply system includes a direct-current power supply source for generating electric power, a power storage unit and a grid-connected power conditioner. The grid-connected power conditioner is connected with the direct-current power supply source, the power storage unit and a commercial power system. The grid-connected power conditioner includes a first voltage converting unit, an inverter circuit and a second voltage converting unit. The first voltage converting unit converts a voltage of direct-current power supplied from the direct-current power supply source to a first direct-current voltage and outputs the first direct-current voltage to direct-current positive and negative buses. The inverter circuit receives the first direct-current voltage from the direct-current positive and negative buses, and converts the first direct-current voltage to an alternating-current voltage and outputs the alternating-current voltage to the commercial power system. The second voltage converting unit is connected between the power storage unit and the direct-current positive and negative buses. During the charging operation of the power storage unit, the second voltage converting unit converts the first direct-current voltage received from the direct-current positive and negative buses to a second direct-current voltage and supplies the second direct-current voltage to the power storage unit. During the discharging operation of the power storage unit, the second voltage converting unit converts the second direct-current voltage received from the power storage unit to the first direct-current voltage and outputs the first direct-current voltage to the direct-current positive and negative buses. The second voltage converting unit has a side connected to the power storage unit and a side connected to the direct-current positive and negative buses, the sides insulated from each other.

### EFFECT OF THE INVENTION

According to the present invention, in a grid-connected power supply system including a power storage device, the electric power loss can be reduced and the safety when a ground fault occurs in the power storage device can be improved.

### BRIEF DESCRIPTION OF THE DRAWINGS

Fig. 1 is a schematic configuration diagram of a grid-connected power supply system of the present embodiment.
Fig. 2 is a circuit diagram showing an example of a voltage converting unit 5 of Fig. 1.
Fig. 3 is a circuit diagram showing another example of voltage converting unit 5 of Fig. 1.
Fig. 4 is a circuit diagram showing an example of a voltage converting unit 7 of Fig. 1.
Fig. 5 is an equivalent circuit diagram of voltage converting unit 7 of Fig. 4 during discharging operations of a power storage unit 6 of Fig. 1.
Fig. 6 is an equivalent circuit diagram of voltage converting unit 7 of Fig. 4 during charging operations of power storage unit 6 of Fig. 1.
Fig. 7 is a circuit diagram showing another example of voltage converting unit 7 of Fig. 1.
Fig. 8 is an equivalent circuit diagram of voltage converting unit 7 of Fig. 7 during discharging operations of power storage unit 6 of Fig. 1.
Fig. 9 is an equivalent circuit diagram of voltage converting unit 7 of Fig. 7 during charging operations of power storage unit 6 of Fig. 1.
Fig. 10 shows a distributed power supply system described in Japanese Patent Laying-Open No. 2005-312287 (patent document 1).

### DESCRIPTION OF THE REFERENCE SIGNS

1: direct-current power supply source; 2: power conditioner; 3, 203: commercial power system; 3A, 3B: direct-current bus; 4, 223: inverter circuit; 5,7: voltage converting unit; 6: power storage unit; 6A: positive terminal; 6B: negative terminal; 8A, 8B, 8C, 228: control unit; 9, 14, 18, 25: high-frequency transformer; 10A, 10B, 13A, 13B, 19A, 19B, 20A, 20B, 22, 29: switching element; 11A, 11B, 16B, 16C, D1 to D 14: diode; 12: LC filter; 12A, 21A, 23, 27, L1, L2: inductor; 12B, 15, 15A, 16A, 16D, 21B, 24, 26, 28: capacitor; 16: voltage multiplying rectifier circuit; 18A, 25A: primary winding; 18B, 25B: secondary winding; 201: direct-current power supply unit; 202: grid-connected inverter device; 211-213: solar cell module; 221, 224: switching unit; 222: DC-DC converter unit; 225 to 227: ground fault detection circuit; 229: display unit; 231-233: DC-DC converter; LT1, LT2, HT1, HT2, LT11, LT12, HT11, HT12: terminal; SA, SB: voltage sensor; SC: current sensor; SW41 to SW46, SW51, SW52: switching circuit; TR1 to TR4, TR11 to TR14: transistor.

### BEST MODES FOR CARRYING OUT THE INVENTION

Embodiments of the present invention will be described in detail below with reference to the drawings. Note that the same reference characters denote the same or equivalent parts.

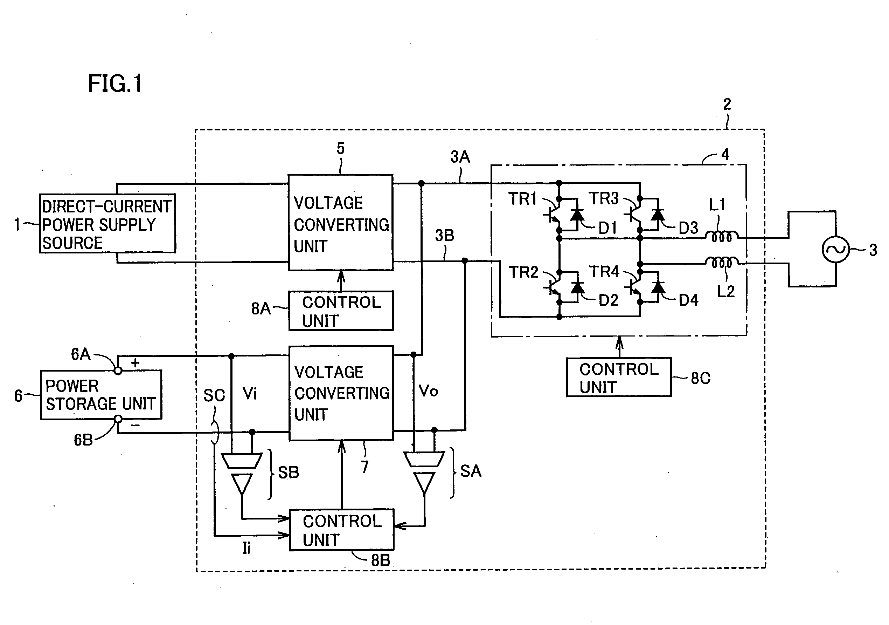

Fig. 1 is a schematic configuration diagram of a grid-connected power supply system of the present embodiment.

With reference to Fig. 1, the grid-connected power supply system of the embodiment includes a direct-current power supply source 1, a power conditioner 2 and power storage unit 6. Power conditioner 2 is connected to direct-current power supply source 1, power storage unit 6 and a commercial power system 3. In many cases, such grid-connected power supply systems are installed in residential houses. Power conditioner 2 is a grid-connected power conditioner that converts direct-current power from direct-current power supply source 1 to alternating-current power of a commercial frequency and supplies the converted alternating-current power to household loads (not shown) connected to commercial power system 3.

Direct-current power supply 1 generates electric power to supply direct-current power to power conditioner 2. Direct-current power supply 1 is a device to generate direct-current power, such as solar cells, a wind turbine generator and fuel cells. Direct-current power supply 1 may be constituted by a generator to output alternating-current power and a diode to rectify alternating-current power from the generator. In the embodiment, direct-current power supply source 1 is solar cells.

Power storage unit 6 is constituted by a secondary battery such as a lead storage battery, an electric double-layer capacitor, a superconducting magnetic energy storage (SMES) device or the like, and is charged and discharged with direct-current power. Note that in the embodiment, power storage unit 6 is a secondary battery. Power storage unit 6 has a positive terminal 6A and a negative terminal 6B.

The configuration of power conditioner 2 is next described. Power conditioner 2 includes direct-current buses 3A and 3B. Note that direct-current buses 3A and 3B are a direct-current positive bus and a direct-current negative bus, respectively. Power conditioner 2 further includes an inverter circuit 4, voltage converting units 5 and 7, control units 8A, 8B and 8C, voltage sensors SA and SB, and a current sensor SC.

Voltage converting unit 5 is an isolated DC-DC converter that raises the voltage of direct-current power from direct-current power supply source 1 (solar cells) and outputs it to direct-current buses 3A and 3B. For example, the amplitude of direct-current voltage output from the solar cells is 150 to 250V, and the amplitude of output voltage of the isolated DC-DC converter is about 350 V.

Voltage converting unit 7 is a bidirectional isolated DC-DC converter. Voltage converting unit 7 raises the voltage of direct-current power from power storage unit 6 (secondary battery). Voltage converting unit 7 lowers the direct-current voltage between direct-current buses 3A and 3B and outputs it to power storage unit 6. For example, the amplitude of direct-current output voltage of power storage unit 6 is less than 300 V, and the amplitude of output voltage from voltage converting unit 7 to direct-current buses 3A and 3B is about 350 V.

Here, if the direct-current output voltage of power storage unit 6 is too low, the loss in voltage conversion increases because the step-up ratio of the DC-DC converter (voltage converting unit 7) increases. On the other hand, if the direct-current output voltage of power storage unit 6 is too high, a large current flows upon a ground failure of power storage unit 6. This increases the possibility of accidents such as ignition, smoking and an electrification in power conditioner 2. In consideration of these respects, the direct-current output voltage of power storage unit 6 is set, e.g., to 200 V.

The input side of inverter circuit 4 is connected to direct-current buses 3 A and 3B, and its output side is connected to commercial power system 3. Inverter circuit 4 converts direct-current power supplied via direct-current buses 3A and 3B to alternating-current power of a commercial frequency (e.g., 50 Hz or 60 Hz) and outputs it to commercial power system 3 of a single phase of 200 V.

As inverter circuit 4, a publicly known inverter circuit may be used. For example, as shown in Fig. 1, inverter circuit 4 may be constituted by a full-bridge circuit and inductors that are connected to the full-bridge circuit and that function as filters.

The configuration of inverter circuit 4 illustrated in Fig. 1 is described in more detail. Inverter circuit 4 includes transistors TR1 to TR4, diodes D 1 to D4, and inductors L 1 and L2.

Transistors TR1 and TR2 are connected in series between direct-current buses 3A and 3B. The cathode of diode D1 is connected to the collector of transistor TR1, and the anode of diode D1 is connected to the emitter of transistor TR1. The cathode of diode D2 is connected to the collector of transistor TR2, and the anode of diode D2 is connected to the emitter of transistor TR2. One end of inductor L1 is connected to the emitter of transistor TR1 and the collector of transistor TR2, and the other end of inductor L 1 is connected to one terminal of commercial power system 3.

Transistors TR3 and TR4 are connected in series between direct-current buses 3A and 3B. The cathode of diode D3 is connected to the collector of transistor TR3, and the anode of diode D3 is connected to the emitter of transistor TR3. The cathode of diode D4 is connected to the collector of transistor TR4, and the anode of diode D4 is connected to the emitter of transistor TR4. One end of inductor L2 is connected to the emitter of transistor TR3 and the collector of transistor TR4, and the other end of inductor L2 is connected to the other terminal of commercial power system 3. It is preferable to use, as the transistors mentioned above, transistor elements having diodes D1 to D4 connected in anti-parallel as body diodes contained therein because the number of elements can be reduced.

Control units 8A, 8B and 8C control voltage converting unit 5, voltage converting unit 7 and inverter circuit 4, respectively. Note that control units 8A, 8B and 8C may be configured as one block. Control units 8A, 8B and 8C may be provided in the interiors of voltage converting unit 5, voltage converting unit 7 and inverter circuit 4, respectively.

The output side of voltage converting unit 5 is connected to direct-current buses 3A and 3B. The output side of voltage converting unit 7 is connected to direct-current buses 3A and 3B.

Voltage sensor SA detects a voltage Vo on the side of direct-current buses 3 A and 3B in voltage converting unit 7. Voltage sensor SB detects a voltage Vi on the side of power storage unit 6 in voltage converting unit 7. Current sensor SC detects a current Ii flowing between power storage unit 6 and voltage converting unit 7. The detection result of each of voltage sensors SA and SB and the detection result of current sensor SC are input to control unit 8B, and control unit 8B controls actions of voltage converting unit 7 based on these detection results. Note that the input and the output of each of voltage sensors SA and SB are preferably insulated from each other (however, they are not necessarily needed to be insulated from each other). This enables control unit 8B to be protected from a large current, e.g., when a short circuit of power storage unit 6 occurs.

In power conditioner 2, voltage converting unit 7 is connected to power storage unit 6, and is also connected to direct-current buses 3A and 3B. During charging operations of power storage unit 6, voltage converting unit 7 converts voltage Vo received from direct-current buses 3A and 3B to voltage Vi and supplies it to power storage unit 6. During discharging operations of power storage unit 6, voltage converting unit 7 converts voltage Vi received from power storage unit 6 to voltage Vo and outputs it to direct-current buses 3A and 3B. In voltage converting unit 7, a side connected to power storage unit 6 is insulated from a side connected to direct-current buses 3A and 3B. As a result of this, if a ground failure occurs in power storage unit 6, its effects on inverter circuit 4, commercial power system 3 and the like are prevented. A grid-connected power conditioner with high safety can thus be obtained.

In voltage converting unit 5, just as in voltage converting unit 7, a side of direct-current power supply source 1 (input side) is insulated from a side of direct-current buses 3A and 3B (output side). This prevents effects on inverter circuit 4, commercial power system 3 and the like upon a ground failure or a short circuit of direct-current power supply source 1. A grid-connected power conditioner with high safety can thus be obtained.

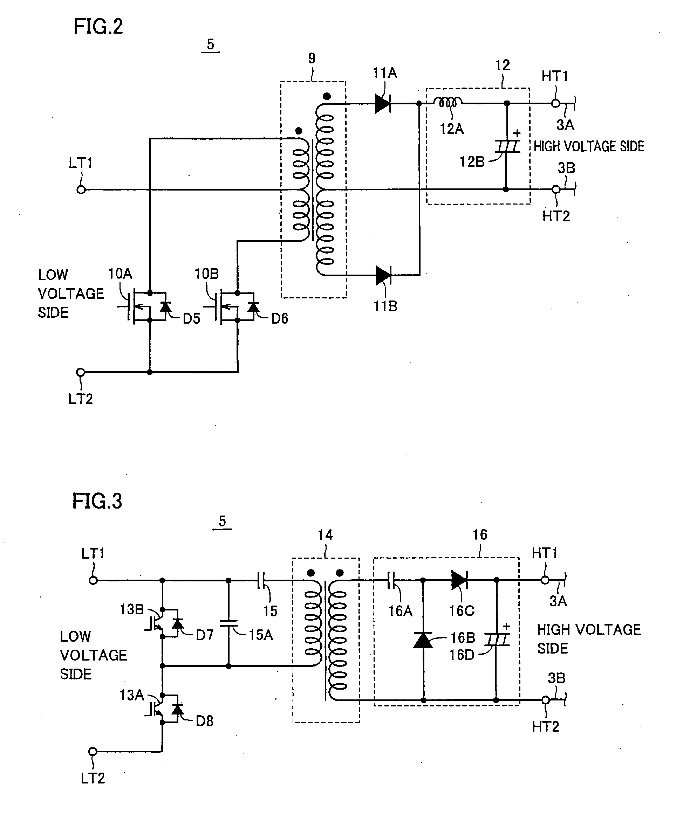

Fig. 2 is a circuit diagram showing an example of voltage converting unit 5 of Fig. 1.

Referring to Fig. 2, voltage converting unit 5 is a push-pull converter, one kind of isolated DC-DC converter. Voltage converting unit 5 is PWM (Pulse Width Modulation) driven with a frequency, e.g., of about 20 kHz.

A terminal LT1 on a low voltage side is connected to a positive electrode side (high voltage side) of direct-current power supply source 1, and a terminal LT2 on the low voltage side is connected to a negative side (low voltage side) of direct-current power supply source 1. A terminal HT1 on the high voltage side is connected to direct-current bus 3A (direct-current positive bus), and a terminal HT2 on the high voltage side is connected to direct-current bus 3B (direct-current negative bus).

Voltage converting unit 5 includes a high-frequency transformer 9 having center taps on both a primary side (low voltage side) and a secondary side (high voltage side). The center tap on the primary side of high-frequency transformer 9 is connected to terminal LT1. The center tap on the secondary side of high-frequency transformer 9 is connected to terminal HT2.

Voltage converting unit 5 further includes switching elements 10A and 10B, diodes D5 and D6, diodes 11A and 11B and an LC filter 12. LC filter 12 has an inductor 12A and a capacitor 12B.

Switching elements 10A and 10B are MOSFETs (metal oxide semiconductor field - effect transistor). The drain of switching element 10A is connected to one end of a primary winding of high-frequency transformer 9, and the source and gate of switching element 10A are connected to terminal LT2. The drain of switching element 10B is connected to the other end of the primary winding of the high-frequency transformer, and the source and gate of switching element 10B are connected to terminal LT2.

The cathode of diode D5 is connected to the drain of switching element 10A, and the anode of diode D5 is connected to the source and gate of switching element 10A. The cathode of diode D6 is connected to the drain of switching element 10B, and the anode of diode D5 is connected to the source and gate of switching element 10B. Note that diodes (body diodes) contained in switching elements 10A and 10B (MOSFETs) may be used as diodes D5 and D6, respectively.

The anode of diode 11A is connected to one end of a secondary winding of high-frequency transformer 9. The anode of diode 11B is connected to the other end of the secondary winding of high-frequency transformer 9. The cathode of diode 11A and the cathode of diode 11B are connected to one end of inductor 12A. The other end of inductor 12A is connected to terminal HT1. The positive electrode of capacitor 12B, an electrolytic capacitor, is connected to terminal HT1, and the negative electrode of capacitor 12B is connected to terminal HT2.

Subsequently, actions of the push-pull converter shown in Fig. 2 are described.

Each of switching elements 10A and 10B provided on the primary side of high-frequency transformer 9 switches between the ON state and the OFF state at the foregoing frequency of about 20 kHz. Note that switching elements 10A and 10B are driven by two drive signals having logics inverse to each other, respectively. In other words, when one of switching elements 10A and 10B is in the ON state, the other is in the OFF state. With actions of switching elements 10A and 10B in this way, the direction of a voltage applied to high-frequency transformer 9 switches.

The turn ratio of high-frequency transformer 9 is set, e.g., to about 1.5 to 1 to 2 to 1. The alternating-voltage raised by high-frequency transformer 9 is rectified by diodes 11A and 11B provided on the secondary side of high-frequency transformer 9. LC filter 12 smoothes rectified waveforms. In this way, a direct-current voltage, e.g., of 350 V is output to the high voltage side.

As shown in Fig. 2, voltage converting unit 5 includes high-frequency transformer 9 that performs transforming actions with the input terminal insulated from the output terminal, and therefore voltage converting unit 5 allows its input to be insulated from its output. Voltage converting unit 5 also allows the circuit configuration to be simplified, achieving cost reduction. Note that switching elements 10A and 10B may be IGBTs (insulated gate bipolar transistors).

Fig. 3 is a circuit diagram showing another example of voltage converting unit 5 of Fig. 1.

Referring to Fig. 3, voltage converting unit 5 is a current resonant type converter, a kind of isolated DC-DC converter. Voltage converting unit 5 includes switching elements 13A and 13B, diodes D7and D8, a high-frequency transformer 14, a capacitor 15 and a voltage multiplying rectifier circuit 16. Voltage multiplying rectifier circuit 16 includes capacitors 16A and 16D and diodes 16B and 16C. Note that terminals LT1, LT2, HT1 and HT2 shown in Fig. 3 are similar to terminals LT1, LT2, HT1 and HT2 shown in Fig. 2, respectively.

Switching elements 13A and 13B are IGBTs. The collector of switching element 13B is connected to terminal LT1. The emitter of switching element 13B is connected to the collector of switching element 13A. The emitter of switching element 13A is connected to terminal LT2.

The cathode of diode D7 is connected to the collector of switching element 13B, and the anode of diode D7 is connected to the emitter of switching element 13B. The cathode of diode D8 is connected to the collector of switching element 13A, and the anode of diode D8 is connected to the emitter of switching element 13A. Note that body diodes contained in switching elements 13B and 13A (IGBTs) may be used as diodes D7 and D8, respectively.

A capacitor 15A is connected between the collector of switching element 13B and the emitter of switching element 13B. Capacitor 15 is connected between the collector of switching element 13B and one end of the primary winding of high-frequency transformer 14. Note that the other end of the primary winding of high-frequency transformer 14 is connected to the emitter of switching element 13B.

Capacitor 16A is connected between one end of the secondary winding of high-frequency transformer 14 and the cathode of diode 16B. The other end of the secondary winding of high-frequency transformer 14 and the anode of diode16B are connected to terminal HT2. The anode of diode 16C is connected to the cathode of diode16B, and the cathode of diode 16C is connected to terminal HT1. The positive electrode of capacitor 16D, an electrolytic capacitor, is connected to terminal HT1, and the negative electrode of capacitor 16D (electrolytic capacitor) is connected to terminal HT2.

Each of switching elements 13A and 13B is driven, in a PFM (Pulse Frequency Modulation) mode where a driving frequency is variable in a range from about 15 kHz to about 70 kHz, by control unit 8A of Fig. 1. Switching elements 13A and 13B alternately become the ON state and the OFF state to drive high-frequency transformer 14 in the subsequent stage.

High-frequency transformer 14 is a leakage transformer having a leakage inductance. Note that the turn ratio of high-frequency transformer 14 is set, e.g., in a range from 1.5 5 to 1 to 2 to 1.

In a current resonant type converter, the current resonance of the leakage inductance component of high-frequency transformer 14 and capacitor 15 is utilized. Waveforms of a current flowing on the primary side of high-frequency transformer 14 have shapes close to those of sine waves. Around the zero point of the sine wave, switching elements 13A and 13B are turned on. When they are turned off, voltages on both ends of each switching element are kept to zero by capacitor 15A. Soft switching of switching elements 13A and 13B are thus achieved. Therefore, an isolated DC-DC converter with small switching losses can be obtained.

Voltage multiplying rectifier circuit 16 is provided on the secondary side of high-frequency transformer 14. Voltage multiplying rectifier circuit 16 raises the voltage of the secondary winding of high-frequency transformer 14 such that the voltage becomes twice as large as the original value. Capacitor 16D is charged with the raised voltage. In this way, a voltage input to the low voltage side of the current resonant type converter can be converted, e.g., to a direct-current voltage of 350 V.

As such, voltage converting unit 5 allows its input to be insulated from its output because of inclusion of high-frequency transformer 14. Voltage converting unit 5 can also convert direct-current voltage with high efficiency. The voltage converting unit also allows the circuit configuration to be simplified, achieving cost reduction. Note that MOSFETs may be used as switching elements 13A and 13B.

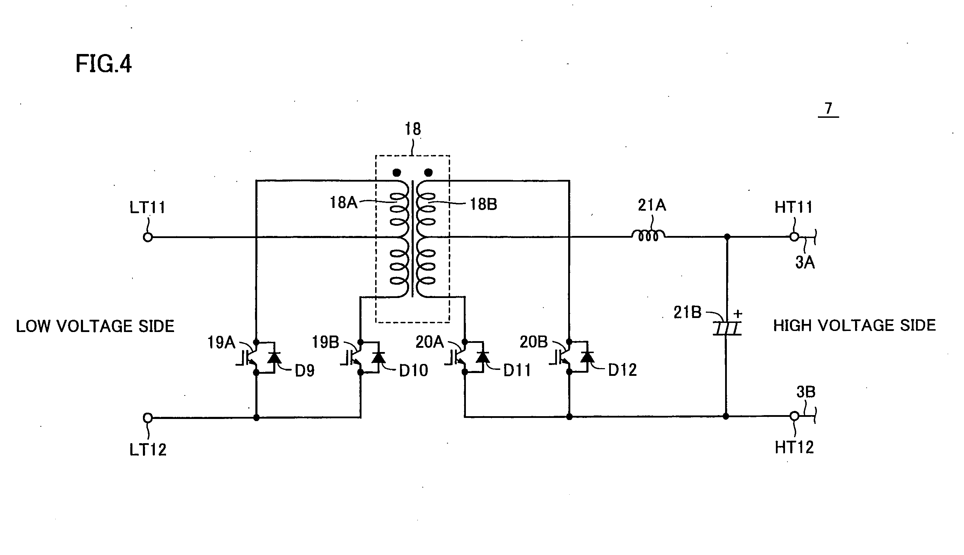

Fig. 4 is a circuit diagram showing an example of voltage converting unit 7 of Fig. 1.

Referring to Fig. 4, voltage converting unit 7 is a "push-pull converter" being similar to the circuit of Fig. 2. Voltage converting unit 7 includes a high-frequency transformer 18, switching elements 19A, 19B, 20A and 20B, diodes D9 to D12, an inductor 21A and a capacitor 21B.

Terminal LT11 on the low voltage side is connected to a side of positive terminal 6A (high voltage side) of power storage unit 6, and terminal LT12 on the low voltage side is connected to a side of negative terminal 6B (low voltage side) of power storage unit 6. Terminal HT11 on the high voltage side is connected to direct-current bus 3A (direct-current positive bus), and terminal HT12 on the high voltage side is connected to direct-current bus 3B (direct-current negative bus).

High-frequency transformer 18 includes a primary winding 18A and a secondary winding 18B having a larger number of turns than that of primary winding 18A. High-frequency transformer 18 has a first center tap on the primary side (low voltage side) and a second center tap on the secondary side (high voltage side). The first center tap is connected to terminal LT 11. The second center tap is connected to terminal HT 11.

Switching elements 19A and 19B are IGBTs. The collector of switching element 19A is connected to one end of two ends, other than the first center tap, of primary winding 18A, and the emitter of switching element 19A is connected to terminal LT12. The collector of switching element 19B is connected to the other end of two ends, other than the first center tap, of primary winding 18A, and the emitter of switching element 19B is connected to terminal LT12.

The cathode of diode D9 is connected to the collector of switching element 19A, and the anode of diode D9 is connected to the emitter of switching element 19A. The cathode of diode D10 is connected to the collector of switching element 19B, and the anode of diode D10 is connected to the emitter of switching element10B. Note that body diodes contained in switching elements 10A and 10B (IGBTs) may be used as diodes D9 and D10.

Inductor 21A has one end connected to the second center tap, and the other end connected to direct-current bus 3A via terminal HT11.

Switching elements 20A and 20B are IGBTs. The collector of switching element 20A is connected to one end of two ends, other than the second center tap, in secondary winding 18B, and the emitter of switching element 20A is connected via terminal HT12 to direct-current bus 3B. The collector of switching element 20B is connected to the other end of two ends, other than the second center tap, in secondary winding 18B, and the emitter of switching element 20B is connected via terminal HT12 to direct-current bus 3B. Note that switching elements 19A, 19B, 20A and 20B may be MOSFETs.

The cathode of diode D11 is connected to the collector of switching element 20A, and the anode of diode D 11 is connected to the emitter of switching element 20A. The cathode of diode D12 is connected to the collector of switching element 20B, and the anode of diode D12 is connected to the emitter of switching element10B. Note that body diodes contained in switching elements 20A and 20B (IGBTs) may be used as diodes D11 and D12.

The positive electrode of capacitor 21B (electrolytic capacitor) is connected to terminal HT11, and the negative electrode of capacitor 12B (electrolytic capacitor) is connected to terminal HT 12.

The push-pull converter shown in Fig. 4 raises a direct-current voltage input to the low voltage side and outputs it to the high voltage side during discharging operations of power storage unit 6 of Fig. 1, and lowers a direct-current voltage input to the high voltage side and outputs it to the low voltage side during charging operations of power storage unit 6 of Fig. 1. Note that the ON state and the OFF state of switching elements 19A, 19B, 20A and 20B are controlled by control unit 8B of Fig. 1.

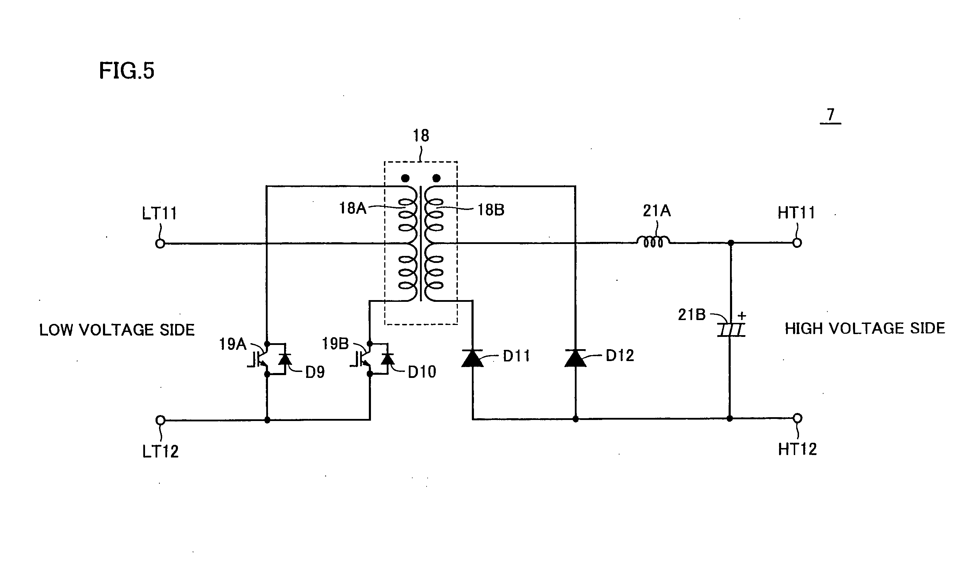

Fig. 5 is an equivalent circuit diagram of voltage converting unit 7 of Fig. 4 during discharging operations of power storage unit 6 of Fig. 1.

Referring to Fig. 5, actions of switching elements 19A and 19B on the primary side of high-frequency transformer 18 are similar to those of the push-pull converter shown in Fig. 2. That is, switching elements 19A and 19B are controlled by control unit 8B of Fig. 1 so that they alternately become the ON state and the OFF state, e.g., at a frequency of about 20 kHz.

On the other hand, switching elements 20A and 20B on the secondary side of high-frequency transformer 18 are controlled by control unit 8B of Fig. 1 so that they are always in the OFF state during discharging operations of power storage unit 6 of Fig. 1. Therefore, switching elements 20A and 20B themselves do not act, and only diodes D11 and D12 contained in switching elements 20A and 20B act.

In other words, during discharging operations of power storage unit 6 of Fig. 1, voltage converting unit 7 performs actions similar to those of the push-pull converter shown in Fig. 2. That is, a direct-current voltage input to the low voltage side is temporarily converted to an alternating-current voltage, and the voltage is raised by high-frequency transformer 18. Alternating-current voltage output from secondary winding 18B is rectified by diodes D11 and D12. The rectified voltage is smoothed by an LC circuit including inductor 21A and capacitor 21B. Thus, a direct-current voltage, e.g., of 350 V can be extracted from the high voltage side.

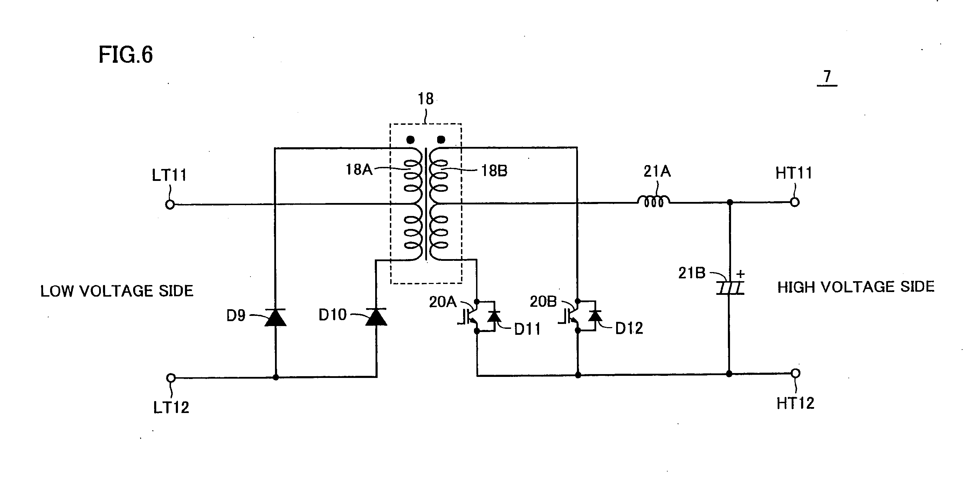

Fig. 6 is an equivalent circuit diagram of voltage converting unit 7 of Fig. 4 during charging operations of power storage unit 6 of Fig. 1.

Referring to Fig. 6, actions of switching elements on the primary side and on the secondary side of high-frequency transformer 18 during charging operations are completely reverse to those during discharging operations. That is, for a direct-current voltage of 350 V supplied from the high voltage side, switching elements 20A and 20B on the secondary side of high-frequency transformer 18 are alternately PWM controlled by control unit 8B of Fig. 1, and switching elements 19A and 19B on the primary side of high-frequency transformer 18 are controlled to be always in the OFF state by control unit 8B of Fig. 1. At this point, only diodes D9 and D10 contained respectively in switching elements 19A and 19B act. That is, a push-pull converter shown in Fig. 6 acts as a step-down converter from the secondary side to the primary side of high-frequency transformer 18. Thus, a direct-current voltage, e.g., of 200 V is obtained on the primary side. A direct-current voltage extracted on the primary side is supplied to power storage unit 6 of Fig. 1.

As shown in Figs. 4 to 6, voltage converting unit 7 switches the switching element to be always in the OFF state according to a transfer direction of electric power, thereby enabling bidirectional voltage conversion to be achieved. With the configuration of voltage converting unit 7 shown in Fig. 4, the number of switching elements such as diodes need not be increased. This allows a low-cost bidirectional DC-DC converter to be achieved.

In voltage converting unit 7 shown in Fig. 4, potentials of the emitters of two switching elements 19A and 19B on the primary side are equal, and potentials of the emitters of two switching elements 20A and 20B on the secondary side are equal. Therefore, a single drive power supply can be used for two switching elements 19A and 19B on the primary side. Likewise, a single drive power supply can be used for two switching elements 20A and 20B on the secondary side. Accordingly, although the number of switching elements is four, the number of drive power supplies needed to drive the switching elements can be reduced to two. From this respect in addition to the foregoing, the configuration of voltage converting unit 7 shown in Fig. 4 can reduce costs.

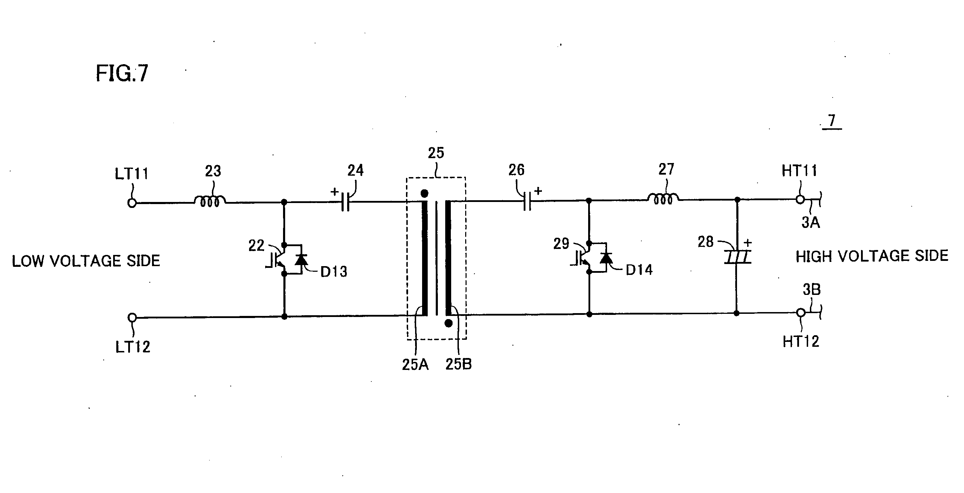

Fig. 7 is a circuit diagram showing another example of voltage converting unit 7 of Fig. 1.

Referring to Fig. 7, voltage converting unit 7 is an isolated Cuk converter, a kind of isolated DC-DC converter. Note that the circuit shown in Fig. 7, like the circuit shown in Fig. 4, enables bidirectional voltage conversion from the low voltage side to the high voltage side and from the high voltage side to the low voltage side.

Referring to Fig. 7, voltage converting unit 7 includes switching elements 22 and 29, diodes D 13 and D 14, inductors 23 and 27, capacitors 24, 26 and 28 and a high-frequency transformer 25.

Note that terminals LT11, LT12, HT11 and HT12 in Fig. 7 are similar to terminals LT11, LT12, HT11 and HT12 in Fig. 4, respectively.

High-frequency transformer 25 includes a primary winding 25A and a secondary winding 25B having a larger number of turns than that of primary winding 25A. One end of primary winding 25A is connected to terminal LT12 (negative terminal 6B of power storage unit 6), and the other end of primary winding 25A is connected to one end of capacitor 24. One end of secondary winding 25B is connected via terminal HT12 to direct-current bus 3B, and the other end of secondary winding 25B is connected to one end of capacitor 26.

Switching element 22 is an IGBT. The collector of switching element 22 is connected to the other end of capacitor 24. The emitter of switching element 22 is connected to the other end of primary winding 25A.

The cathode of diode D13 is connected to the collector of switching element 22, and the anode of diode D 13 is connected to the emitter of switching element 22. A body diode contained in switching element 22 (IGBT) may be used as diode D13.

Inductor 23 is connected between the other end of capacitor 24 and terminal LT11 (positive terminal 6A of power storage unit 6).

Switching element 29 is an IGBT. The collector of switching element 29 is connected to the other end of capacitor 26. The emitter of switching element 29 is connected via terminal HT12 to direct-current bus 3B. The anode of diode D14 is connected to the emitter of switching element 29. A body diode contained in switching element 29 (IGBT) may be used as diode D14.

One end of inductor 27 is connected to the other end of capacitor 26, and the other end of inductor 27 is connected via terminal HT11 to direct-current bus 3A. The positive electrode of capacitor 28 being an electrolytic capacitor is connected to terminal HT11, and the negative electrode of capacitor 28 is connected to terminal HT12.

Note that switching elements 22 and 29 may be MOSFETs.

The Cuk converter shown in Fig. 7 raises a direct-current voltage input to the low voltage side and outputs it to the high voltage side during discharging operations of power storage unit 6 of Fig. 1, and lowers a direct-current voltage input to the high voltage side and outputs it to the low voltage side during charging operations of power storage unit 6 of Fig. 1. Note that the ON state and the OFF state of switching elements 22 and 29 are controlled by control unit 8B of Fig. 1.

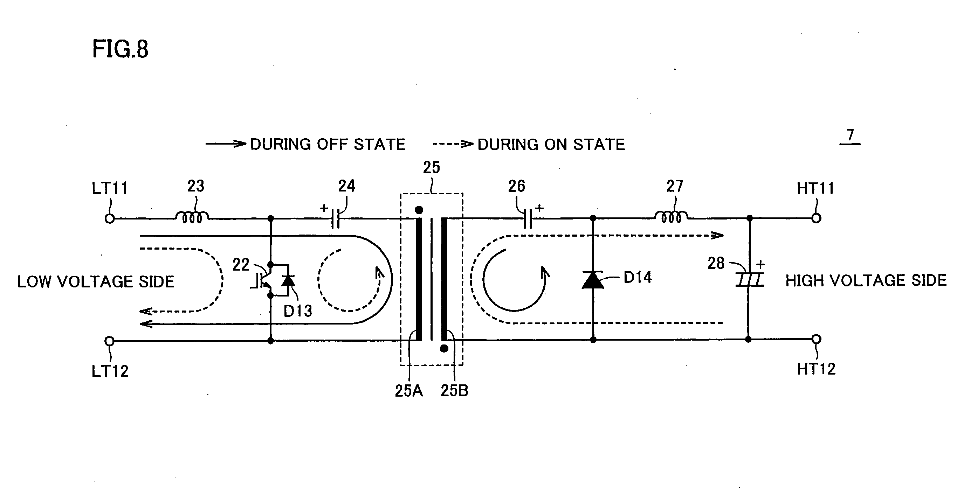

Fig. 8 is an equivalent circuit diagram of voltage converting unit 7 of Fig. 7 during discharging operations of power storage unit 6 of Fig. 1.

Referring to Fig. 8, during discharging operations, switching element 29 is controlled to be always in the OFF state by control unit 8B of Fig. 1. Since a MOSFET or an IGBT is used as switching element 29, only diode D14 acts during the OFF state of switching element 29.

Switching element 22 is PWM driven at about 20 kHz by control unit 8B of Fig. 1. Capacitors 24 and 26 are charged during the OFF state of switching element 22. On the primary side of high-frequency transformer 25, a current flows along a path passing from power storage unit 6 of Fig. 1 via inductor 23, capacitor 24 and primary winding 25A and returning to power storage unit 6 to charge capacitor 24. On the secondary side of high-frequency transformer 25, a current flows along a path passing from capacitor 26 via secondary winding 25B and diode D 14 and returning to capacitor 26 to charge capacitor 26.

During the ON state of switching element 22, on the primary side of high-frequency transformer 25, energy is stored in inductor 23 and a discharge current of capacitor 24 flows, and on the secondary side of high-frequency transformer 25, a discharge current of capacitor 26 flows. On the primary side of high-frequency transformer 25, a current flows along a path passing from power storage unit 6 of Fig. 1 via inductor 23 and switching element 22 and returning to power storage unit 6, and a discharge current of capacitor 24 flows along a path passing from capacitor 24 via switching element 22 and primary winding 25A of high-frequency transformer 25 and returning to capacitor 24. On the secondary side of high-frequency transformer 25, a discharge current of capacitor 26 flows along a path passing from capacitor 28 via secondary winding 25B, capacitor 26 and inductor 27 and returning to capacitor 28. In this way, energy is transferred from the primary side to the secondary side of high-frequency transformer 25, so that a direct-current voltage, e.g., of 350 V is obtained on the high voltage side.

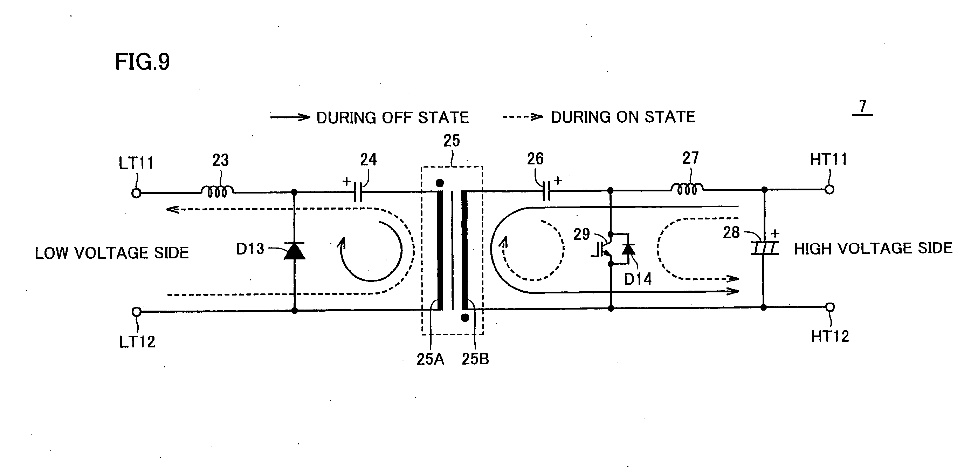

Fig. 9 is an equivalent circuit diagram of voltage converting unit 7 of Fig. 7 during charging operations of power storage unit 6 of Fig. 1.

Referring to Fig. 9, during discharging operations, switching element 22 is controlled to be always in the OFF state by control unit 8B of Fig. 1. Control unit 8B of Fig. 1 controls switching element 29 on the secondary side with control actions similar to those (PWM drive) on switching element 22 on the primary side during discharging. By this control, energy is transferred from the secondary side to the primary side of high-frequency transformer 25, so that a direct-current voltage, e.g., of about 200 V is supplied to power storage unit 6 of Fig. 1.

As shown in Figs. 7 to 9, voltage converting unit 7 switches the switching element to be always in the OFF state according to the transfer direction of electric power, thereby enabling bidirectional voltage conversion to be achieved. With the configuration of voltage converting unit 7 shown in Fig. 7, the number of switching elements such as diodes need not be increased. This allows a low-cost bidirectional DC-DC converter to be achieved.

An isolated Cuk converter can reduce the number of switching elements from four to two as compared with a push-pull converter. This allows costs of a DC-DC converter to be further reduced.

Referring again to Fig. 1, description is given. As described above, voltage sensor SA detects voltage Vo on the side of direct-current buses 3A and 3B of voltage converting unit 7, and voltage sensor SB detects voltage Vi on power storage unit 6 of voltage converting unit 7. The current sensor detects current Ii.

During discharging operations of power storage unit 6, control unit 8B controls the time during which switching elements of voltage converting unit 7 are tuned on. Control unit 8B performs feedback control to vary an on-pulse width Ton of a control signal supplied to a switching element of voltage converting unit 7 so that voltage Vo output to direct-current buses 3A and 3B is kept to a constant value (350V) and the electric power (the product of Vi and Ii) discharged from power storage unit 6 has a first desired value Pd. By this control, power conditioner 2 can cause power storage unit 6 to discharge desired electric power, and can supply a constant direct-current voltage to inverter circuit 4.

As the first desired value Pd, a value stored in control unit 8B may be used (in this case, control unit 8B may contain a power storage unit to store the desired value). Control unit 8B may use a desired value calculated on the basis of another detected amount (e.g., direct-current voltage of direct-current power supply source 1) as desired value Pd, and may also use a desired value input to control unit 8B from the outside as desired value Pd.

During charging operations of power storage unit 6, control unit 8B controls the time during which switching elements of voltage converting unit 7 are tuned on. Control unit 8B performs feedback control to vary on-pulse width Ton of a switching element so that voltage Vo input from direct-current buses 3A and 3B is kept to 350 V and the charge power (the product of Vi and Ii) supplied from voltage converting unit 7 to power storage unit 6 has a second desired value Pc. By this control, power conditioner 2 can supply desired electric power to power storage unit 6 to charge power storage unit 6.

As second desired value Pc, a value stored in control unit 8B may be used, a desired value calculated on the basis of another detected amount may also be used, and a desired value input to control unit 8B from the outside may also be used.

As described above, if voltage converting unit 7 is a push-pull converter shown in Fig. 4, during discharging operations, switching elements 19A and 19B are alternately PWM driven with on-pulse width Ton, so that the time during which each of switching elements 19A and 19B is in the ON state is controlled, and during charging operations, switching elements 20A and 20B are alternately PWM driven with on-pulse width Ton, so that the time during which each of switching elements 20A and 20B is in the ON state is controlled. If voltage converting unit 7 is an isolated Cuk converter shown in Fig. 7, during discharging operations, switching element 22 is PWM driven with on-pulse width Ton, and during charging operations, switching element 29 is PWM driven with on-pulse width Ton.

Note that switching elements shown in circuits of Figs. 2, 3, 4 and 7 are MOSFETs or IGBTs containing diodes therein in the foregoing description; however, diodes and transistors (MOSFETs, IGBTs, bipolar transistors and the like) may be separately provided.

Control unit 8C controls actions of inverter circuit 4 to control an output current from inverter circuit 4 to commercial power system 3 so that the voltage of direct-current buses 3A and 3B is kept to a constant value. Direct-current power output from voltage converting unit 5 and voltage converting unit 7 can therefore be output via inverter circuit 4 to commercial power system 3.

It is preferable that inverter circuit 4 perform DC-AC conversion (conversion from a direct current to an alternating current) from a side of direct-current buses 3A and 3B to a side of commercial power system 3 in the daytime during which solar cells (direct-current power supply source 1) generate electric power, and perform AC-DC conversion (conversion from an alternating current to a direct current) from the side of commercial power system 3 to the side of direct-current buses 3A and 3B as the need arises at night during which solar cells do not generate electric power. Voltage converting unit 7 performs charging operations during actions of AC-DC conversion of inverter circuit 4, and as a result, power storage unit 6 can be charged at night using electric power supplied from commercial power system 3.

Note that MOSFETs or IGBTs are used as transistors TR1 to TR4 in inverter circuit 4 (full-bridge circuit). In this case, it is preferable that body diodes contained in transistors TR1 to TR4 be used as diodes D1 to D4, respectively. Making all transistors always in the OFF state at night allows a full-bridge circuit to be used as a diode bridge. This enables AC-DC conversion from the side of commercial power system 3 to the side of direct-current buses 3A and 3B to be performed.

By performing AC-DC conversion as mentioned above, bidirectional actions can be achieved without increasing the number of switching elements. This allows inverter circuit 4 (bidirectional inverter) to be produced at reduced cost.

Note that in the case of a bidirectional inverter, the voltage of direct-current buses 3A and 3B is determined by the peak-to-peak of commercial power system 3. If the root-mean-square value of an alternating-current voltage is 200 V, the voltage of the direct-current buses is about 280 V. In this case, control unit 8B controls voltage converting unit 7 to lower a voltage of about 280 V input from the direct-current buses to a voltage of about 200 V.

Thus, since inverter circuit 4 is a bidirectional inverter, system voltage at night can be stored in power storage unit 6. Therefore, electric power stored at night can be discharged to be supplied to commercial power system 3 at times of power shortage other than at night. This results in leveling of the load power.

The embodiment disclosed herein is to be considered in all respects as illustrative and not restrictive. The scope of the present invention is indicated by the appended claims rather than by the foregoing description, and all changes that come within the meaning and range of equivalency of the claims are intended to be embraced therein.

## Claims

1. A grid-connected power conditioner connected with a direct-current power supply source for generating electric power, a power storage unit and a commercial power system, comprising:
a first voltage converting unit converting a voltage of direct-current power supplied from said direct-current power supply source to a first direct-current voltage and outputting said first direct-current voltage to direct-current positive and negative buses;
an inverter circuit receiving said first direct-current voltage from said direct-current positive and negative buses, and converting said first direct-current voltage to an alternating-current voltage and outputting the alternating-current voltage to said commercial power system; and
a second voltage converting unit, connected between said power storage unit and said direct-current positive and negative buses, for converting said first direct-current voltage received from said direct-current positive and negative buses to a second direct-current voltage and supplying the second direct-current voltage to said power storage unit during a charging operation of said power storage unit, and converting said second direct-current voltage received from said power storage unit into said first direct-current voltage and outputting said first direct-current voltage to said direct-current positive and negative buses during a discharging operation of said power storage unit,
said second voltage converting unit having a side connected to said power storage unit and a side connected to said direct-current positive and negative buses, the sides insulated from each other.

2. The grid-connected power conditioner according to claim 1, wherein:
said second voltage converting unit is an isolated DC-DC converter; and
said second voltage converting unit includes a high-frequency transformer performing a transforming action with an input terminal and an output terminal insulated from each other.

3. The grid-connected power conditioner according to claim 2, wherein:
said power storage unit has:
a positive terminal, and
a negative terminal;
said high-frequency transformer has:
a primary winding having a first center tap connected to said positive terminal, and
a secondary winding having a larger number of turns than said primary winding and having a second center tap; and
said second voltage converting unit further includes:
a first switching element connected between one end of two ends other than said first center tap in said primary winding and said negative terminal,
a second switching element connected between the other end of the two ends other than said first center tap in said primary winding and said negative terminal,
an inductor having one end connected to said second center tap and the other end connected to a direct-current positive bus of said direct-current positive and negative buses,
a third switching element connected between one end of two ends other than said second center tap in said secondary winding and a direct-current negative bus of said direct-current positive and negative buses, and
a fourth switching element connected between the other end of the two ends other than said second center tap in said secondary winding and said direct-current negative bus.

4. The grid-connected power conditioner according to claim 3, further comprising a control unit for causing, during the discharging operation of said power storage unit, said third and fourth switching elements to be always in an OFF state and controlling an ON-OFF state of said first and second switching elements, and causing, during the charging operation of said power storage unit, said first and second switching elements to be always in an OFF state and controlling an ON-OFF state of said third and fourth switching elements.

5. The grid-connected power conditioner according to claim 4, wherein said control unit performs PWM control to said first to fourth switching elements to control, during the discharging operation of said power storage unit, a time during which each of said first and second switching elements is in the ON state so that an output voltage from said second voltage converting unit to said direct-current positive and negative buses is kept to said first direct-current voltage and a value of electric power discharged from said power storage unit becomes a first desired value and to control, during the charging operation of said power storage unit, a time during which each of said third and fourth switching elements is in the ON state so that a value of electric power supplied from said second voltage converting unit to said power storage unit becomes a second desired value.

6. The grid-connected power conditioner according to claim 2, wherein:
said power storage unit has:
a positive terminal, and
a negative terminal;
said high-frequency transformer has:
a primary winding having one end connected to said negative terminal, and
a secondary winding having a larger number of turns than said primary winding and having one end connected to a direct-current negative bus of said direct-current positive and negative buses; and
said second voltage converting unit further includes:
a first capacitor having one end connected to the other end of said primary winding,
a first switching element connected between the other end of said first capacitor and the other end of said primary winding,
a first inductor connected between the other end of said first capacitor and said positive terminal,
a second capacitor having one end connected to the other end of said secondary winding,
a second switching element connected between said direct-current negative bus and the other end of said second capacitor, and
a second inductor connected between the other end of said second capacitor and a direct-current positive bus of said direct-current positive and negative buses.

7. The grid-connected power conditioner according to claim 6, further comprising a control unit for causing, during the discharging operation of said power storage unit, said second switching element to be always in an OFF state and controlling an ON-OFF state of said first switching element, and causing, during the charging operation of said power storage unit, said first switching element to be always in an OFF state and controlling an ON-OFF state of said second switching element.

8. The grid-connected power conditioner according to claim 7, wherein said control unit performs PWM control to said first and second switching elements to control, during the discharging operation of said power storage unit, a time during which said first switching element is in an ON state so that an output voltage from said second voltage converting unit to said direct-current positive and negative buses is kept to said first direct-current voltage and a value of electric power discharged from said power storage unit becomes a first desired value and to control, during the charging operation of said power storage unit, a time during which said second switching element is in an ON state so that a value of electric power supplied from said second voltage converting unit to said power storage unit becomes a second desired value.

9. The grid-connected power conditioner according to claim 1, wherein:
said first voltage converting unit is connected between said direct-current power supply source and said direct-current positive and negative buses; and
said direct-current power supply source is insulated from said direct-current positive and negative buses.

10. The grid-connected power conditioner according to claim 9, wherein:
said first voltage converting unit is an isolated DC-DC converter; and
said first voltage converting unit includes a high-frequency transformer performing a transforming action with an input terminal and an output terminal insulated from each other.

11. The grid-connected power conditioner according to claim 1, wherein said inverter circuit converts, during a period when said direct-current power supply source generates electric power, said first direct-current voltage received from said direct-current positive and negative buses to the alternating-current voltage and outputs the alternating-current voltage to said commercial power system, and converts, during a predetermined period of a period when said direct-current power supply source does not generate electric power, the alternating-current voltage received from said commercial power system to said first direct-current voltage and outputs said first direct-current voltage to said direct-current positive and negative buses.

12. A grid-connected power supply system, comprising:
a direct-current power supply source for generating electric power;
a power storage unit; and
a grid-connected power conditioner connected with said direct-current power supply source, said power storage unit and a commercial power system, said grid-connected power conditioner including:
a first voltage converting unit converting a voltage of direct-current power supplied from said direct-current power supply source to a first direct-current voltage and outputting said first direct-current voltage to direct-current positive and negative buses;
an inverter circuit receiving said first direct-current voltage from said direct-current positive and negative buses, and converting said first direct-current voltage to an alternating-current voltage and outputting the alternating-current voltage to said commercial power system; and
a second voltage converting unit, connected between said power storage unit and said direct-current positive and negative buses, for converting said first direct-current voltage received from said direct-current positive and negative buses to a second direct-current voltage and supplying the second direct-current voltage to said power storage unit during a charging operation of said power storage unit, and converting said second direct-current voltage received from said power storage unit to said first direct-current voltage and outputting said first direct-current voltage to said direct-current positive and negative buses during a discharging operation of said power storage unit,
said second voltage converting unit having a side connected to said power storage unit and a side connected to said direct-current positive and negative buses, the sides insulated from each other.
